# EUROPÄISCHE PATENTSCHRIFT

(11) **EP 2 757 261 B1**
(45) Veröffentlichungstag und Bekanntmachung des Hinweises auf die Patenterteilung: **02.09.2015**
(21) Anmeldenummer: 13196191.4
(22) Anmeldetag: 09.12.2013
(51) Int. Cl.: F03G 7/06

(54) **Aktuator**
Actuator
Actuateur

(30) Priorität: 21.01.2013 DE 102013100564
(43) Veröffentlichungstag der Anmeldung: 23.07.2014
(73) Patentinhaber: Actuator Solutions GmbH, 91757 Treuchtlingen (DE)
(72) Erfinder: Köpfer, Markus, 73495 Regelsweiler (DE); Dr. Sonnleitner, Tobias, 90489 Nürnberg (DE)
(74) Vertreter: Meissner, Bolte & Partner GbR

(56) Entgegenhaltungen:
- US-A1- 2002 113 499
- US-A1- 2002 185 932
- US-A1- 2004 256 920
- US-A1- 2012 174 572
- US-B2- 7 650 914

## Beschreibung

Die Erfindung betrifft einen Aktuator mit einem von einem SMA-Element betätigten beweglichen Element bzw. Stellglied. Das SMA-Element ist aus einer Formgedächtnislegierung (shape memory alloy) gebildet und ist ein langgestrecktes, z.B. drahtförmiges Element, auf das im Folgenden Bezug genommen wird. Ein solcher Aktuator ist beispielsweise aus US2004/0256920 A1 und US 2002/0185932 A1 bekannt. An zumindest einem der Drahtenden des SMA-Elements ist ein Verbinder, herkömmlicherweise mit Hilfe einer Crimp-Verbindung fixiert. Das Drahtende ist mit Hilfe des Verbinders mechanisch und elektrisch mit einem Bauteil des Aktuators, das zumindest teilweise aus einem elektrisch nicht leitenden Material besteht, verbunden, wobei dieses Bauteil ein Grundrahmen oder ein Gehäuse des Aktuators oder auch das Stellglied sein kann. Über die elektrische Verbindung wird das SMA-Element bestromt, wobei es sich dabei, aufgrund einer erwärmungsbedingten Phasenumwandlung der Formgedächtnislegierung verkürzt und dabei das Stellglied eine Bewegung bzw. einen Arbeitshub ausführt. Nach Stromunterbrechung und Abkühlung erfolgt eine Umwandlung in die Ausgangsphase, wobei das SMA-Element - z.B. unterstützt durch ein das Stellelement entgegen der Richtung des Arbeitshubs beaufschlagendes Federelement - wieder seine ursprüngliche Länge einnimmt.

Zur elektrischen und mechanischen Anbindung des SMA-Elements an ein Bauteil des Aktuators ist herkömmlicherweise der Verbinder an einer Leiterbahn des Bauteils mit einer elektrisch leitenden Stoffschlussverbindung, etwa eine Verlötung (JP 2008-03 88 02 A, US 2012/0174572 A1), oder durch Crimpen (US 7,650,914 B2, US 2004/0256920 A1) fixiert. In DE 60 2005 002 401 T2 ist ein Aktuator der eingangs genannten Art beschrieben, bei an dem Ende eines drahtförmigen SMA-Elements ein Crimpverbinder fixiert ist. Zur elektrischen und mechanischen Verbindung mit einer Leiterbahn des Aktuators sind an der Leiterbahn hakenförmige Element angeformt, in welche der Crimpverbinder eingehängt ist (siehe z.B. Fig. 21). Dabei ist, da die Leiterbahn mit dem Bauteil verbunden ist, der Verbinder gleichzeitig mittelbar am Bauteil fixiert.

Damit eine exakte Steuerung des Arbeitshubs des Stellglieds möglich ist, muss das SMA-Element mit einer gewissen Vorspannung in den Aktuator eingebaut bzw. mit seinen Drahtenden mit einem Bauteil des Aktuators verbunden werden. Dazu finden derzeit zwei Montagevarianten Anwendung:
Bei der einen Variante wird zuerst der Verbinder an der Leiterbahn des einen Bauteils des Aktuators angelötet und anschließend das mit einer Zugspannung beaufschlagte Drahtende an einem Crimp-Element des Verbinders fixiert. Bei dieser Montagevariante ist eine aufwändige Prozesskontrolle erforderlich, um einerseits die maximalen Belastungen des SMA-Elements während der Montage nicht zu überschreiten und andererseits das SMA-Element exakt mit der vorgegebenen Vorspannung zu verbauen.

Bei der zweiten Montagevariante ist der Verbinder mit seinem Crimp-Element bereits mit dem SMA-Element verbunden, wenn dieses unter Vorspannung an einem Bauteil des Aktuators fixiert wird. Nachteilig bei dieser Variante ist, dass eine kontrollierte Vorspannung des SMA-Elements nicht oder nur mit hohem prozesstechnischem Aufwand möglich ist. Außerdem besteht die Gefahr einer zu hohen thermischen Belastung des SMA-Elements beim Verlöten des Verbinders mit der Leiterbahn. Eine solche Belastung kann zwar durch eine elektrisch leitende Verklebung verhindert werden, was aber wiederum mit einem hohen prozesstechnischen Aufwand verbunden ist.

Aufgabe der Erfindung ist es, einen Aktuator und ein Verfahren zur Herstellung eines Aktuators anzugeben, welche eine exakte Einstellung der Vorspannung des SMA-Elements auf einfache Weise erlauben.

Diese Aufgabe wird hinsichtlich eines Aktuators gemäß Anspruch 1 dadurch gelöst, dass der Verbinder mit dem nichtleitenden Material des Bauteils mechanisch verbunden ist und mit einer Kontaktfläche mit der Leiterbahn in elektrischem Kontakt steht. Im Gegensatz zu bisherigen Aktuatoren der in Rede stehenden Art, bei der durch die Fixierung des Verbinders an der Leiterbahn, gleichzeitig eine elektrische und mechanische Verbindung gewährleistet ist, sind bei der Erfindung die elektrische und die mechanische Verbindung voneinander getrennt: Der Verbinder ist an einem aus elektrisch nicht leitenden Material bestehenden Bereich des Bauteils z.B. formschlüssig fixiert, wobei dadurch ein anderer Bereich des Verbinders, nämlich dessen Kontaktfläche, in Kontakt mit der Leiterbahn gehalten wird, d.h. die Kontaktfläche wird gegen die Leiterbahn gedrückt und auf diese Weise ein elektrischer Kontakt zwischen Verbinder und Leiterbahn hergestellt wird.

Während bei herkömmlichen Aktuatoren im Falle bereits an einem Verbinder durch eine Vercrimpung fixierter Drahtenden praktisch nur eine das SMA-Element thermisch belastende Lötverbindung in Frage kommt, stehen bei einem erfindungsgemäßen Aktuator mehrere Verbindungsarten zur Verfügung, welche mit keinen oder zumindest mit einem geringeren Wärmeeintrag in das SMA-Element verbunden sind, als dies bei einer Lötverbindung der Fall ist.

Vorteilhaft ist außerdem, dass Verbinder und Leiterbahn bei der Montage im Sinne einer Gleitpaarung zusammenwirken können, so dass bei der im Zuge der Einstellung der Vorspannung des SMA-Elements der Verbinder problemlos gegenüber der Leiterbahn bewegbar ist. Sobald das SMA-Element die gewünschte Vorspannung hat, erfolgt die mechanische Fixierung des Verbinders am elektrisch nicht leitenden Material des Bauteils.

Hinsichtlich eines Verfahrens zur Herstellung bzw. Montage eines Aktuators wird die oben erwähnte Aufgabe gemäß Anspruch 14 gelöst. Bei diesem Verfahren wird ein SMA-Element bereitgestellt, an dessen zumindest einem Drahtende bereits ein Verbinder vorhanden ist. Dieser ist entweder ein separates, durch Crimpen an dem Drahtende fixiertes Teil, oder er ist einstückig mit dem SMA-Element ausgebildet. Wenn hier von Crimpen gesprochen wird, so ist darunter ein Fügeverfahren zu verstehen, bei dem der Verbinder bzw. ein Bereich davon plastisch verformt wird und dabei das Drahtende festgeklemmt wird.

Das mit wenigstens einem Verbinder versehene SMA-Element wird an einem Aktuator so positioniert, dass seine Kontaktfläche mit der Leiterbahn des Bauteils in Kontakt steht. Durch Beaufschlagung des Drahtendes mit einer Zugkraft wird das SMA-Element vorgespannt. Während des Vorspannens, bei dem sich das SMA-Element gegebenenfalls dehnt und dabei verlängert, dient die Leiterbahn als Gleitunterlage für den Verbinder. Bei Erreichen der Soll-Vorspannung des SMA-Elements wird der Verbinder am Kunststoffmaterial des Bauteils fixiert. Aufgrund dieser Fixierung wird der elektrische Kontakt zwischen der Kontaktfläche des Verbinders und der Leiterbahn dauerhaft hergestellt, ohne dass dazu ein das SMA-Element thermisch belastender Lötprozess erforderlich ist. Die Qualität des elektrischen Kontakts zwischen dem Verbinder und der Leiterbahn kann bei Bedarf mit Hilfe eines zwischen den genannten Teilen vorhandenen leitfähigen Medium, etwa eine Kontaktpaste, optimiert werden. Die Fixierung des Verbinders am Kunststoffmaterial des Bauteils kann durch Verwendung eines Klebstoffs oder vorzugsweise durch Aufschmelzen des Kunststoffmaterials, etwa durch Heißverstemmen, bei vergleichsweise geringem Wärmeeintrag in das SMA-Element erfolgen.

Die Erfindung wird nun unter Bezugnahme die beigefügten Zeichnungen näher erläutert. Es zeigen:
- Fig. 1: eine stark schematisierte Abbildung eines Aktuators mit einem SMA-Draht, an dessen Enden jeweils ein zur Fixierung an einem Bauteil des Aktuators dienender Verbinder vorhanden ist,
- Fig. 2A: einen Verbinder in Draufsicht,
- Fig. 2B: eine Seitenansicht in Richtung des Pfeils S in Fig. 2A,
- Fig. 3: einen mit einer Leiterbahn versehenen Bereich eines Bauteils, in Richtung des Pfeiles III in Fig. 1 gesehen, wobei jedoch der Verbinder noch nicht am Bauteil fixiert ist,
- Fig. 4: das Bauteil von Fig. 3, wobei jedoch der Verbinder in einem Vormontagezustand gezeigt ist, in dem er mit einer Kontaktfläche an der Leiterbahn anliegt,
- Fig. 5: einen Schnitt entsprechend Linie V-V in Fig. 4,
- Fig. 6: das Bauteil von Fig. 3 mit daran fixiertem Verbinder,
- Fig. 7: ein Bauteil mit einer gegenüber Fig. 6 modifizierten Fixierung des Verbinders, in einer Fig. 3 entsprechenden Darstellung,
- Fig. 8: ein modifiziertes Bauteil in einer Fig. 3 entsprechenden Darstellung,
- Fig. 9: eine Draufsicht auf ein aus einer Vielzahl von SMA-Elementen zusammengesetztes Vorprodukt,
- Fig. 10: ein modifiziertes Vorprodukt in einer Fig. 9 entsprechenden Darstellung,
- Fig. 11: einen Schnitt entsprechend Linie XI-XI in Fig. 10,
- Fig. 12: ein alternativ gestaltetes Bauteil in einer Fig. 3 entsprechenden Darstellung,
- Fig. 13: einen Schnitt entsprechend Linie XIII-XIII in Fig. 12,

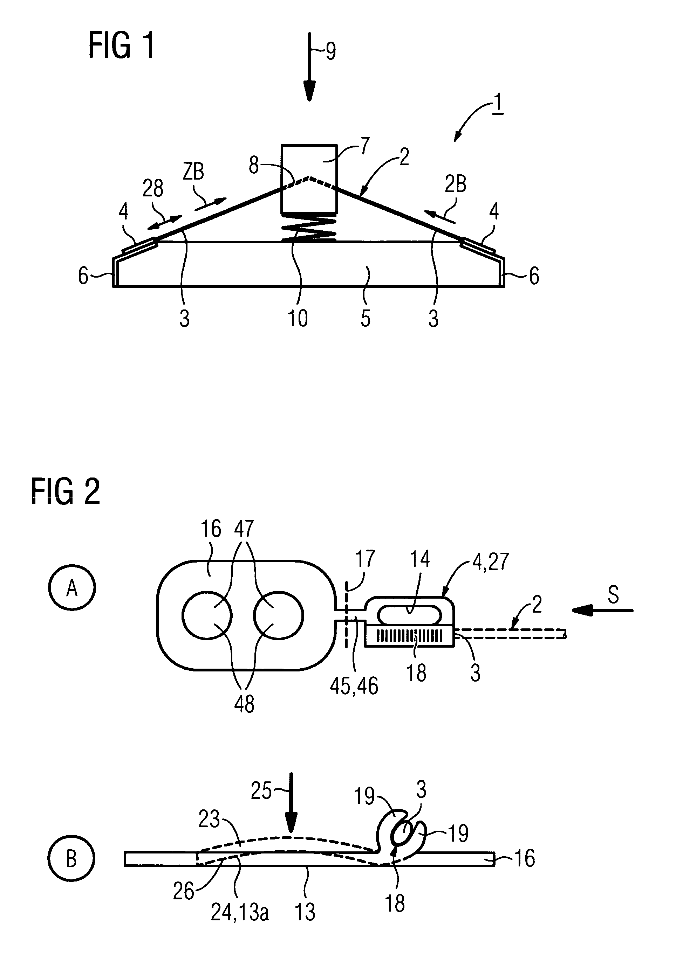

Ein in Fig. 1 stark schematisiert dargestellter Aktuator 1 der hier in Rede stehenden Art umfasst ein langgestrecktes SMA-Element 2 das vorzugsweise als Draht mit beispielsweise runder Querschnittform ausgebildet ist. Im Folgenden wird exemplarisch auf ein drahtförmiges SMA-Element 2 Bezug genommen. Wenn dabei dessen Enden als Drahtenden bezeichnet werden, so sind darunter auch die Enden anders gestalteter SMA-Elemente zu verstehen.

An den Drahtenden 3 des SMA-Elements 2 ist jeweils ein Verbinder 4 fixiert. Zumindest ein Verbinder 4 ist mit einem Bauteil 5 des Aktuators 1 so verbunden, dass einerseits eine mechanische Fixierung der Drahtenden 3 am Bauteil 5 und andererseits eine elektrische Verbindung mit einer am Bauteil 5 angeordneten Leiterbahn 6 gewährleistet ist. Das SMA-Element 2 wirkt mit einem beweglichen Teil des Aktuators 1 zusammen, das im Folgenden mit Stellglied 7 bezeichnet wird. Das Stellglied 7 ist beispielsweise ein Ventilstößel, der eine Ventilöffnung (nicht gezeigt) steuert. Ein mittlerer Abschnitt 8 des SMA-Elements 2 ist mit dem Stellglied 7 verbunden beziehungsweise stützt sich, wenn dieses bestromt wird und sich dadurch verkürzt, an dem Stellglied 7 ab, so dass dieses eine Bewegung bzw. einen Arbeitshub ausführen kann. Im vorliegenden Beispiel ist das SMA-Element 2 v-förmig angeordnet, wobei es bei einer Verkürzung das Stellglied 7 in Richtung des Pfeils 9 bewegt wird. Zweckmäßiger Weise ist das Stellglied 7 entgegen der genannten Bewegungsrichtung von einem Federelement 10, beispielsweise einer Schraubendruckfeder beaufschlagt, welche ein Zurückstellen des Stellglieds in seine Ausgangsstellung und des SMA-Elements 2 in seinen Ausgangszustand bewirkt. Das Bauteil 5 kann z.B. ein Gehäuseteil oder auch das Stellglied 7 selbst sein.

Das Bauteil besteht ganz oder zum Teil aus einem elektrisch nicht leitenden Material wie Kunststoff, vorzugsweise aus einem thermoplastischen Kunststoff und ist, unabhängig von der Art des verwendeten Kunststoffs vorzugsweise als MID-Bauteil (MID = molded interconnect device) ausgebildet. Es handelt sich dabei um ein Bauteil, auf das eine elektrisch leitende, eine Leiterbahn 6 bildende Schicht beispielsweise mit Hilfe einer Laser-Direkt-Strukturierung aufgebracht ist.

Zum Zwecke der oben genannten elektrischen und mechanischen Fixierung des SMA-Elements 2 am Bauteil 5 ist zumindest einer der beiden Verbinder 4 mit dem elektrisch nicht leitenden Material des Bauteils mechanisch verbunden. Der zur Bestromung des SMA-Elements 2 erforderliche elektrische Kontakt kommt dadurch zustande, dass am Verbinder 4 eine Kontaktfläche 13 vorhanden ist, mit welcher er an der ihm zugeordneten Leiterbahn 6 anliegt bzw. mit dieser in punkt-, linienförmigen oder flächenförmigem Kontakt steht, wodurch eine elektrische Verbindung zwischen Verbinder 4 und Leiterbahn 6 herstellt wird.

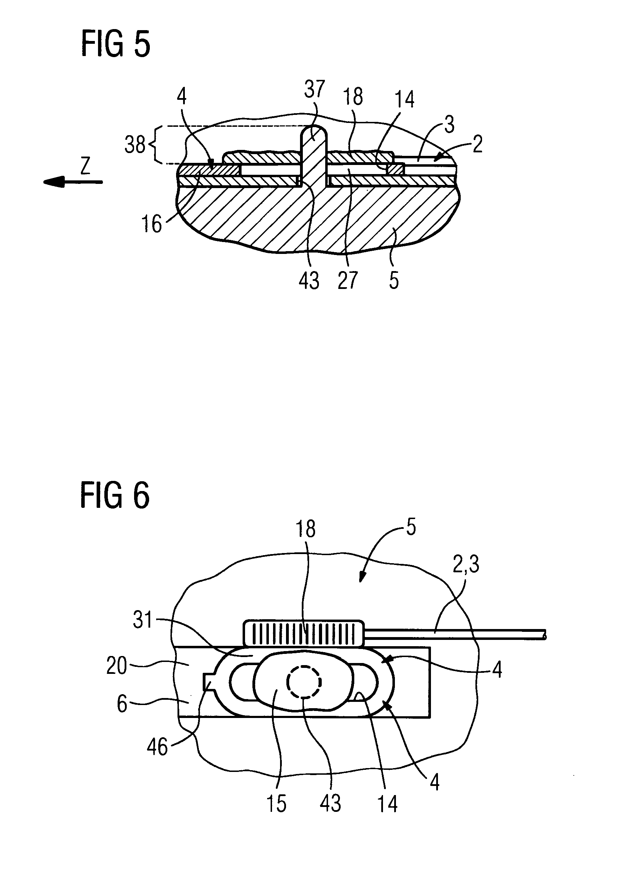

Zwischen dem Verbinder 4 und dem elektrisch nicht leitenden Material des Bauteils 5 liegt ein Form- oder Kraftschluss vor, welcher einer Zugbeanspruchung ZB im Betrieb des Aktuators 1, also wenn sich das SMA-Element 2 verkürzt, entgegenwirkt. Zur Herstellung des Form- und/oder Kraftschlusses lässt sich das thermoplastische Material, beispielsweise durch kontrollierte Laserpulse unterstützt, lokal erweichen. Durch eine Verformung des erweichten Materials wird ein Teil des Verbinders darin eingebettet oder damit in Kontakt gebracht. Zumindest ein Formschluss wird vorzugsweise dadurch bewerkstelligt, dass der Verbinder 4 von einer Öffnung 14 durchsetzt ist, welche zumindest teilweise mit Kunststoffmaterial 15 des Bauteils 5 gefüllt ist (Fig. 6).

Zum Zwecke der Montage des SMA-Elements 2 ist in einem Vormontagezustand des Verbinders 4 an diesem ein Griffelement 16 vorhanden, das später, wenn das SMA-Element 2 an einem Bauteil 5 fixiert ist, wieder abgetrennt wird, was durch die gestrichelte Linie 17 in Fig. 2 angedeutet ist. Das am Verbinder 4 fixierte SMA-Element 2 ist in Fig. 2 mit gestrichelten Linien dargestellt. Das Griffelement 16 ist zweckmäßigerweise an dem dem SMA-Element 2 abgewandten Ende des Verbinders 4 angeordnet.

Die gegenseitige Fixierung von Verbinder 4 und dem Drahtende 3 ist durch eine Crimp-Verbindung gewährleistet. Hierzu ist am Verbinder 4 ein Crimp-Element 18 angeordnet. Zur klemmenden Fixierung des Drahtendes 3 umfasst das Crimp-Element 18 zwei Füge-Laschen 19 welche nach einer plastischen Verformung das Drahtende 3 zwischen sich festklemmen (Fig. 2B).

In dem beispielsweise in Fig. 6 gezeigten Montagezustand, wenn also der Verbinder 4 am Kunststoffmaterial 15 des Bauteils 5 fixiert und elektrisch mit der Leiterbahn verbunden ist, liegt die an der dem Bauteil 5 zugewandten Seite des Verbinders 4 vorhandene Kontaktfläche 13 an der Leiterbahn 6 beziehungsweise an einer dem Verbinder 4 zugewandten Gegenkontaktfläche 20 der Leiterbahn 6 mit einer Anpresskraft an. Die Anpresskraft wird durch die mechanische Verbindung zwischen dem Kunststoffmaterial des Bauteils 5 und dem Verbinder 4 gewährleistet. Um späteren Setzungs- oder Materialermüdungserscheinungen entgegenzuwirken oder auch zum Toleranzausgleich ist es zweckmäßig, dass sich der Verbinder 4 mit seiner Kontaktfläche 13 federnd an der Leiterbahn 6 beziehungsweise der Gegenkontaktfläche 20 abstützt. Dies kann z.B. durch separate Federelemente oder eine Form des Verbinders, welche federnd wirkt, gewährleistet werden. Vorzugsweise ist vorgesehen, dass der Verbinder 4 insgesamt oder zumindest ein mit der Leiterbahn 6 zur Herstellung des elektrischen Kontakts zusammenwirkender Bereich des Verbinders 4 als bogenförmig gekrümmte Blattfeder 23 (Fig. 2B) ausgestaltet ist, wobei deren der Leiterbahn 6 zugewandte Seite 24 zumindest teilweise an der Kontaktfläche 13a anliegt und beispielswese konkav gekrümmt ist. Denkbar sind natürlich auch andere Formgestaltungen, die eine Federfunktion gewährleisten. Bei der Montage des SMA-Elements 2 wird die Blattfeder 23 in Richtung des Pfeils 25 mit einer Kraft beaufschlagt und zur Leiterbahn 6 beziehungsweise zur Gegenkontaktfläche 20 gedrückt. Dabei flacht sich die Blattfeder 23 ab, so dass zumindest deren - in Bezug auf die Längserstreckung der Leiterbahn 6 - seitlichen Flächenbereiche 26 sich etwa parallel zur Leiterbahn 6 erstrecken und mit dieser in einem flächen-, linien- oder punktförmigen Kontakt stehen.

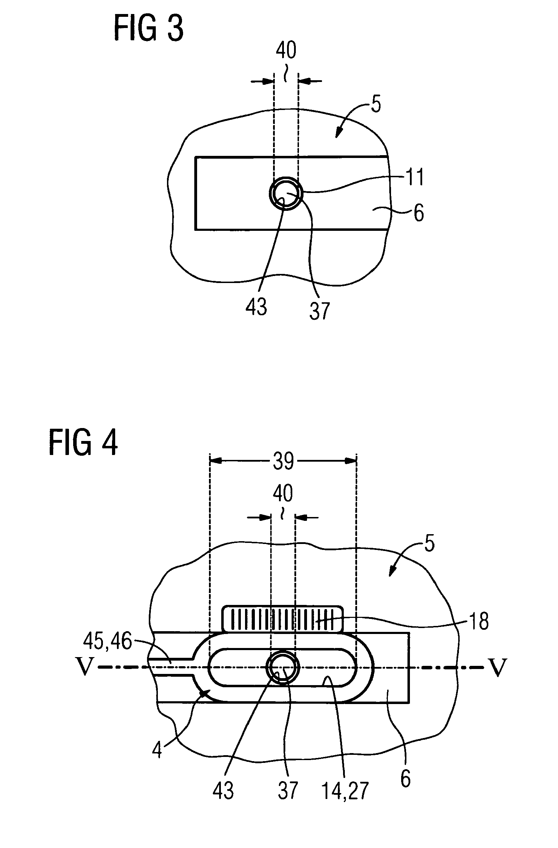

Bei einer besonders bevorzugten Ausführungsvariante ist der Aktuator 1 so ausgestaltet, dass die ihn durchsetzende Öffnung 14 in der Kontaktfläche 13 ausmündet. Eine weitere Öffnung 43 durchgreift die Leiterbahn 6, wobei diese mit der Öffnung 14 des Verbinders 4 verbunden ist (siehe insbesondere Fig. 3 bis 6). Das Kunststoffmaterial 15, welches den Formschluss zwischen Verbinder 4 und Bauteil 5 bewirkt, erstreckt sich dabei durch die Öffnung 43 hindurch und in die Öffnung 14 des Verbinders 4 hinein (Fig. 6). Diese Ausgestaltung ermöglicht eine platzsparende Anbindung des SMA-Elements 2 an das Bauteil, da der Verbinder allenfalls eine der Breite der Leiterbahn entsprechende Breite aufzuweisen braucht, so dass er die Leiterbahn zum Zwecke seiner Fixierung am Kunststoffmaterial des Bauteils 5 seitlich nicht überragt. Die Öffnung 43 ist dabei vorzugsweise so bemessen, dass sie innerhalb der Leiterbahn 6 bzw. der Gegenkontaktfläche 20 angeordnet ist, d.h. dass sie von einem ringförmig geschlossenen Öffnungsrand 11 umgrenzt ist.

Bei einer weiteren bevorzugten Ausgestaltung des Verbinders 4 ist die Öffnung 14 als Langloch 27 ausgebildet, welches sich in Längsrichtung 28 des Drahtendes 3 bzw. in Längsrichtung der Leiterbahn erstreckt. Eine derartige Ausgestaltung der Öffnung 14 ist insofern vorteilhaft, als sich dadurch bei der Montage des SMA-Elements 2, eine Beweglichkeit des Verbinders 4 in Längsrichtung 28 des Drahtendes 3 bei der Einstellung der Vorspannung des SMA-Elements 2 ergibt. In das Langloch 27 hineinragendes Kunststoffmaterial füllt das Langloch 27 zumindest teilweise so aus, dass sich ein Formschluss ergibt. Durch diesen Formschluss wird hier als auch bei den sonstigen genannten Ausführungsbeispielen auf montagetechnisch einfache Weise erreicht, das voreingestellte Spannung des SMA-Elements dauerhaft erhalten bleibt. Bei einer nur teilweisen Füllung füllt das Kunststoffmaterial 15 das Langloch 27 jedoch in dessen Breitenrichtung 29 aus, so dass zumindest ein Reibschluss und/oder Stoffschluss zwischen dem Kunststoffmaterial 15 und der Innenwandung des Langloches 27 entsteht. Ganz allgemein kann die Verbindung zwischen dem Kunststoffmaterial 15 und dem Verbinder 4 noch dadurch erhöht werden, dass die miteinander zusammenwirkenden Grenzflächen von Kunststoffmaterial 15 und/oder Verbinder 4 im Berührungsbereich aufgeraut oder auf sonstige Weise mit Strukturen versehen und dadurch miteinander verzahnt sind. Das das Langloch 27 oder eine anders gestaltete Öffnung 14 des Verbinders zumindest teilweise füllende Kunststoffmaterial kann den der Leiterbahn 6 abgewandten Lochrandbereich 31 des Verbinders 4 überlappen, wie dies in Fig. 6 gezeigt ist.

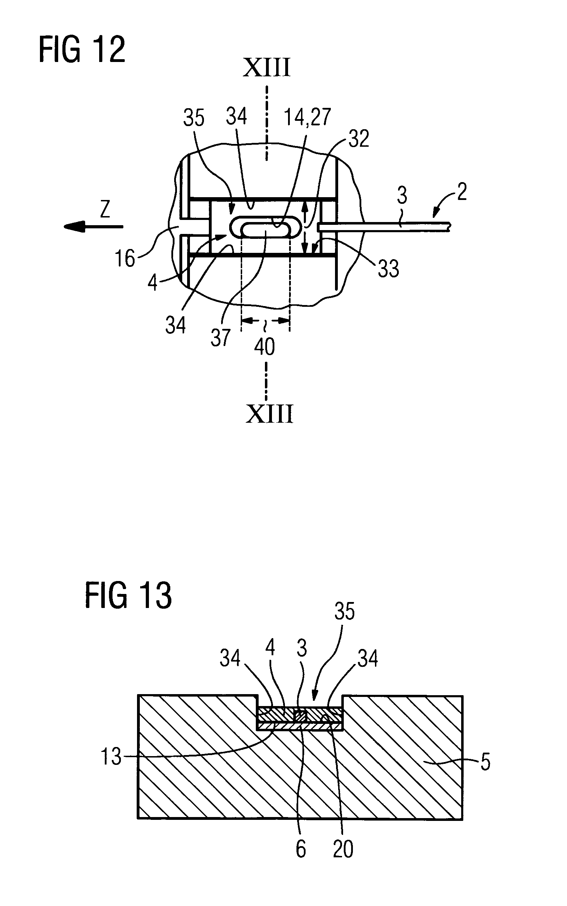

Die Ausgestaltung der Öffnung 14 als Langloch 27 kann dazu ausgenutzt werden, den Verbinder 4 während der Montage und der dabei stattfindenden Vorspannung des SMA-Elements 2 auf einer exakt zur Längsrichtung 28 verlaufenden Bewegungsbahn zu führen. Eine andere Möglichkeit dies zu bewerkstelligen besteht darin, dass am Bauteil 5 eine den Verbinder 4 zumindest teilweise aufnehmende in Längsrichtung 28 des Drahtendes 3 verlaufende Führungskulisse 33 (Fig. 12) vorhanden ist. Die Führungskulisse 33 wird vorzugsweise von einer mit zwei sich gegenüberliegenden Nutwänden 34 den Verbinder 4 flankierenden Nut 35 gebildet.

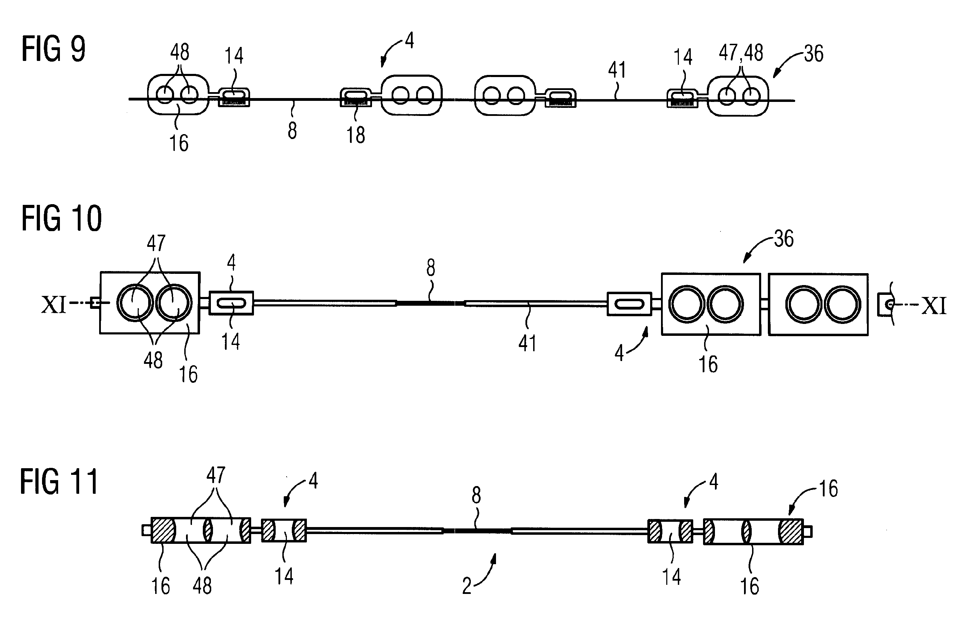

Wie weiter oben erwähnt worden ist, ist der Verbinder 4 mit Hilfe eines Crimp-Elements 18 am SMA-Element 2 bzw. an dessen Drahtende 3 fixiert. Bei einer bevorzugten Ausgestaltung ist eine Fixierung dieser Art nicht vorhanden. Der Verbinder 4 ist vielmehr einstückig mit dem SMA-Element 2 bzw. mit dessen Drahtende 3 ausgebildet (Fig.10 bis 13). Ein derartiges SMA-Element 2 kann beispielsweise durch Schmelzspinnen hergestellt werden. Bei diesem Verfahren wird eine Schmelze einer Formgedächtnislegierung, beispielsweise TiNi, durch eine Düse gepresst und auf eine gekühlte, sich drehende Trommel aufgespritzt. Aus dem dabei entstehenden bandförmigen SMA-Element 2 werden beispielsweise mit Hilfe eines PEM-Prozessen (PEM = Precision Electromechanical Etching) Strukturen herausgearbeitet, nämlich ein SMA-Element 2, an dessen Drahtenden 3 sich Verbinder 4 befinden, die vorzugsweise auch noch mit Griffelementen 16 versehen sind.

Hinsichtlich einer Fertigungsvereinfachung sind Vorprodukte 36 zweckmäßig, die aus einer Vielzahl von SMA-Elementen 2, gebildet sind, wie dies in Fig. 9 und 10 dargestellt ist. Ein Vorprodukt 36 umfasst einen gegebenenfalls zu einer Spule aufgewickelten SMA-Draht 41, an dem in einem SMA-Element 2 entsprechenden Abständen Verbinder 4 angeordnet sind.

Zur Herstellung eines Aktuators 1 wird ein SMA-Element 2 der oben beschriebenen Art, also ein solches bereitgestellt, an dessen zumindest einem Drahtende 3 ein Verbinder 4 angeordnet, also einstückig mit diesem ausgebildet oder durch Crimpen verbunden ist. Das SMA-Element 2 wird an dem Aktuator 1 so positioniert, dass die Kontaktfläche 13 des Verbinders 4 an der Leiterbahn 6 des Bauteils 5 bzw. an der Gegenkontaktfläche 20 anliegt. Damit ein Aktuator 1 der in Rede stehenden Art einwandfrei arbeitet, muss sein SMA-Element 2 mit einer gewissen Vorspannung am Aktuator 1 bzw. an einem Bauteil 5 des Aktuators 1 fixiert sein. Zu diesem Zweck wird das SMA-Element 2 durch Beaufschlagung seiner Drahtenden mit einer Zugkraft Z kontrolliert vorgespannt. Wenn die vorgesehene Soll-Vorspannung des SMA-Elements 2 erreicht ist, wird der Verbinder 4 am Bauteil 5 fixiert, wobei diese Fixierung aber nicht zwischen dem Verbinder 4 und der Leiterbahn 6 sondern zwischen Verbinder 4 und dem Kunststoffmaterial des Bauteils 5 erfolgt. Zur Herstellung dieser Verbindung wird ein Bauteil 5 verwendet, das zumindest teilweise aus thermoplastischem Kunststoff besteht, wobei ein Teil des Kunststoffmaterials durch Einwirkung von Wärme erweicht und so verformt wird, dass sich zwischen ihm und dem Verbinder 4 eine form- und/oder kraftschlüssige Verbindung ausbildet.

Zur Erzeugung der kraft- und/oder formschlüssigen Verbindung wird bei einer bevorzugten Verfahrensvariante ein Bauteil (5) verwendet, das wenigstens einen Vorsprung 37 aus thermoplastischem Kunststoffmaterial aufweist. Der Vorsprung wird erweicht und so verformt, dass der Verbinder 4 auf die oben genannte Art und Weise, also form- und/oder kraftschlüssig am Bauteil 5 bei der gewünschten Vorspannung des SMA-Elements 2 am Bauteil 5 fixiert wird.

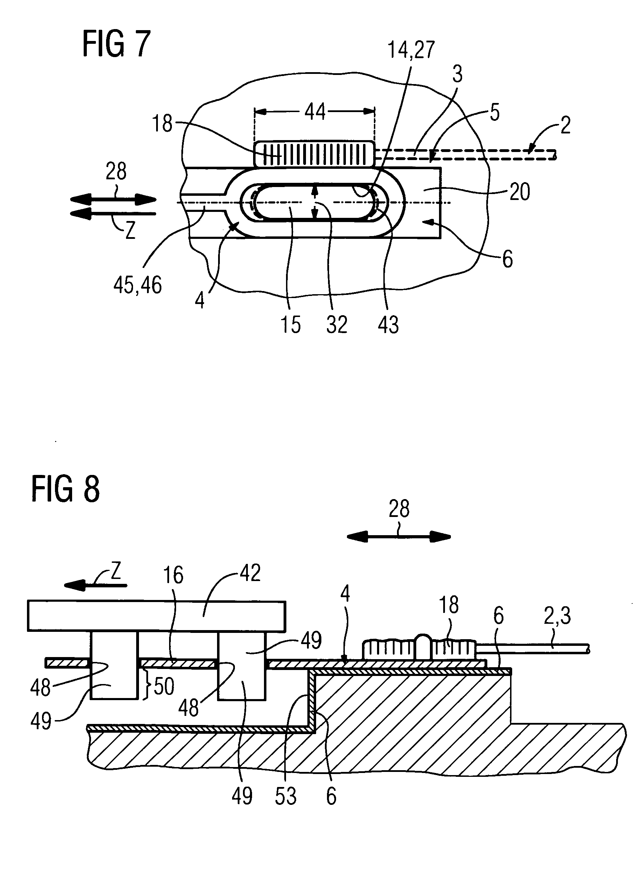

Bei einer besonders bevorzugten Verfahrensvariante wird ein von einer Öffnung 14 durchgriffener Verbinder 4 so positioniert, dass der Vorsprung 37 die Öffnung 14 des Verbinders 4 durchsetzt (Fig. 5). Der Vorsprung 37 bzw. dessen aus der Öffnung 14 vorstehender Überstand 38 wird durch Anwendung von Wärme erweicht und beispielsweise durch Heißverstemmen so verformt, dass das erweichte, später erhärtende thermoplastische Kunststoffmaterial die Öffnung 14 zumindest teilweise ausfüllt und somit das oben bereits erwähnte Kunststoffmaterial 15 bildet. In der Zusammenwirkung mit einer Öffnung 14, deren lichte Weite 39 (Fig. 4) in Längsrichtung 28 größer ist als die in der genannten Richtung gemessene Abmessung 40 (Fig. 3, 12) des Vorsprungs 37 ergibt sich eine Beweglichkeit des Verbinders 4 während der Montage des SMA-Elements 2 in Längsrichtung 28, so dass die jeweils gewünschte Vorspannung des SMA-Elements 2 problemlos einstellbar ist. Eine Führung des Verbinders bei der Vorspannung des SMA-Elements 2 kann auch durch eine Führungskulisse 33 der oben beschriebenen Art gewährleistet werden. Eine Führung in der genannten Richtung kann aber auch allein mit Hilfe eines Vorsprungs 37 und einer als Langloch 27 ausgebildeten Öffnung 14 des Verbinders 4 erreicht werden. Dazu muss der Vorsprung 27 eine dem Langloch 27 entsprechende Breite 32 aber eine geringere Länge 44 als das Langloch 27 aufweisen (Fig. 7). Dadurch ist der Verbinder 4 beim Vorspannen des SMA-Elements 2 in Breitenrichtung am Vorsprung 37 fixiert in Längsrichtung 28 des Drahtendes 3 aber beweglich.

Die Fixierung des Verbinders 4 am Bauteil 5 erfolgt vorzugsweise durch Heißverstemmen des Vorsprungs 37. Dieser wird also durch ein Stempelwerkzeug erweicht und so verformt, dass das erweichte Kunststoffmaterial 15 die Öffnung 14 des Verbinders 4 unter Ausbildung eines Form- und/oder Kraftschlusses zumindest teilweise ausfüllt.

Die Handhabung des Verbinders 4 zum Zwecke der Positionierung und Vorspannung des SMA-Elements 2 wird durch das am Verbinder angeordnete Griffelement 16 erleichtert. Das beispielsweise plattenförmige Griffelement 16 wird, wenn die Montage des SMA-Elements 2 abgeschlossen ist, entfernt. Um das Abtrennen des Griffelements 16 vom übrigen Verbinder 4 zu erleichtern, ist eine Trennzone 45 vorgesehen, die allgemein als eine Materialschwächung, speziell als ein dünner Verbindungssteg ausgebildet ist. Das Griffelement 16, das vorzugsweise größer und breiter ist als der Verbinder 4, weist ein Bedienungselement 47 auf, das mit einem Handhabungswerkzeug 42 zusammenwirkt (Fig. 8). Das Bedienungselement 47 ist vorzugsweise von zwei Ausnehmungen 48 gebildet, welche das Griffelement 16 durchsetzen. In die Ausnehmungen 48können zwei Zapfen 49 des Handhabungswerkzeugs 42 eingesteckt werden. Um ein sicheres Halten des Griffelements 16 zu gewährleisten, ist es zweckmäßig, dass die Zapfen 49 die Ausnehmungen 48 durchsetzen, wobei sie auf der dem Bauteil 5 zugewandten Seite des Griffelements 16, mit einem Überstand 50 vorstehen. Damit dies behinderungsfrei möglich ist, ist am Bauteil eine Vertiefung bzw. ein Rücksprung 53 vorhanden, in welchen die Überstände 50 der Zapfen hineinragen können.

## Patentansprüche

1. Aktuator mit einem beweglichen Stellglied (7), einem zur unidirektionalen Bewegung des Stellglieds dienenden drahtförmigen SMA-Element (2), an dessen zumindest einem Drahtende (3) ein eine Kontaktfläche (13) aufweisender Verbinder (4) aus einem elektrisch leitenden Material fixiert ist, und einem zumindest teilweise aus elektrisch nicht leitenden Kunststoffmaterial bestehenden, mit einer Leiterbahn (6) versehenen Bauteil (5), **dadurch gekennzeichnet, dass** der Verbinder (4) an einem aus dem nichtleitenden Material bestehenden Bereich des Bauteils fixiert ist, wobei dadurch die Kontaktfläche (13) in elektrisch leitenden Kontakt mit der Leiterbahn (6) gehalten wird.

2. Aktuator nach Anspruch 1, **dadurch gekennzeichnet, dass** das Kunststoffmaterial des Bauteils (5) ein thermoplastischer Kunststoff ist.

3. Aktuator nach Anspruch 1 oder 2, **dadurch gekennzeichnet, dass** der Verbinder (4) von einer Öffnung (14) durchsetzt ist, welche zumindest teilweise mit Kunststoffmaterial (15) des Bauteils (5) gefüllt ist.

4. Aktuator nach Anspruch 3, **dadurch gekennzeichnet, dass** die Öffnung (14) in der Kontaktfläche (13) ausmündet, und dass die Leiterbahn von einer mit der Ausnehmung verbundene Öffnung (43) durchgriffen ist, durch die sich Kunststoffmaterial (15) des Bauteils (5) in die Öffnung (14) des Verbinders (4) hinein erstreckt.

5. Aktuator nach Anspruch 3 oder 4, **dadurch gekennzeichnet, dass** die Öffnung (14) ein sich in Längsrichtung des Drahtendes (3) erstreckendes Langloch (27) ist.

6. Aktuator nach einem der vorhergehenden Ansprüche, **dadurch gekennzeichnet, dass** am Bauteil (5) eine den Verbinder zumindest teilweise aufnehmende, in Längsrichtung (28) des Drahtendes (3) verlaufende Führungskulisse (33) vorhanden ist.

7. Aktuator nach Anspruch 6, **dadurch gekennzeichnet, dass** die Führungskulisse (33) von einer, mit zwei sich gegenüberliegenden Nutwänden (34) den Verbinder (4) flankierenden Nut (35) gebildet ist.

8. Aktuator nach einem der vorhergehenden Ansprüche, **dadurch gekennzeichnet, dass** sich der Verbinder(4) mit seiner Kontaktfläche (13) federnd an der Leiterbahn (6) abstützt.

9. Aktuator nach Anspruch 8, **dadurch gekennzeichnet, dass** der Verbinder (4) eine bogenförmig gekrümmte Blattfeder (23) umfasst, deren der Leiterbahn (6) zugewandte Seite (24) zumindest teilweise an der Kontaktfläche (13) anliegt.

10. Aktuator nach einem der vorhergehenden Ansprüche, **dadurch gekennzeichnet, dass** der Verbinder (4) ein Crimp-Element (18) umfasst, mit dem er am Drahtende (3) fixiert ist.

11. Aktuator nach einem der vorhergehenden Ansprüche, **dadurch gekennzeichnet, dass** der Verbinder (4) einstückig mit dem Drahtende (3) ausgebildet ist.

12. Aktuator nach einem der vorhergehenden Ansprüche, **dadurch gekennzeichnet, dass** das Bauteil (5) ein MID-Bauteil ist.

13. Verfahren zur Herstellung eines Aktuators (1) nach einem der vorhergehenden Ansprüche, mit folgenden Schritten:
a) es wird ein SMA-Element (2) bereitgestellt, an dessen zumindest einem Drahtende (3) ein Verbinder (4) angeordnet ist,
b) das SMA-Element wird an dem Aktuator so positioniert, dass die Kontaktfläche (13) des Verbinders (4) mit der Leiterbahn (6) des Bauteils (5) in Kontakt steht,
c) das SMA-Element (2) wird durch Beaufschlagung des Drahtendes (3) mit einer Zugkraft (Z) vorgespannt,
d) bei Erreichen einer Soll-Vorspannung des SMA-Elements (2) wird der Verbinder (4) am Kunststoffmaterial des Bauteils (5) fixiert.

14. Verfahren nach Anspruch 13, **dadurch gekennzeichnet, dass** ein Bauteil (5) verwendet wird, das zumindest teilweise aus einem thermoplastischen Kunststoff besteht, wobei ein Teil des Kunststoffmaterials durch Einwirkung von Wärme erweicht und so verformt wird, dass sich zwischen ihm und dem Verbinder (4) eine form- und/oder kraftschlüssige Verbindung ausbildet.

15. Verfahren nach Anspruch 14, **dadurch gekennzeichnet, dass** ein Bauteil (5) verwendet wird, das einen Vorsprung (37) aus thermoplastischem Material aufweist, welcher zur Fixierung des Verbinders (4) erweicht und verformt wird.

16. Verfahren nach Anspruch 15, **dadurch gekennzeichnet, dass** der Verbinder (4) so an der Leiterbahn (6) positioniert wird, dass der Vorsprung (37) die Öffnung (14) des Verbinders (4) durchsetzt.

17. Verfahren nach einem der Ansprüche 13 bis 16, **dadurch gekennzeichnet, dass** ein Verbinder (4) verwendet wird, an dem ein Griffelement (16) angeordnet ist, wobei zur Vorspannung des SMA-Elements (2) der Verbinder (4)am Griffelement (16) gegriffen wird.

18. Verfahren nach Anspruch 17, **dadurch gekennzeichnet, dass** ein Verbinder (4) verwendet wird, bei dem das Griffelement (16) an dessen dem SMA-Element (2) abgewandten Ende angeordnet ist.

19. Verfahren nach Anspruch 17 oder 18, **dadurch gekennzeichnet, dass** nach erfolgter Fixierung des Verbinders (4) am Bauteil (5) das Griffelement (16) abgetrennt wird.

## Claims

1. Actuator having a moveable control element (7), a wire-shaped SMA element (2) serving for the unidirectional movement of the control element, to the at least one wire end (3) of which a connector (4) which has a contact surface (13) and which is made from an electrically conductive material is fixed, and a component which consists at least partially of electrically non-conductive plastic material and is provided with a conductor path (6), **characterised in that** the connector (4) is fixed to a region of the component which consists of the non-conductive material, wherein the contact surface (13) is thereby held in electrically-conductive contact with the conductor path (6).

2. Actuator according to claim 1, **characterised in that** the plastic material of the component (5) is a thermoplastic plastic.

3. Actuator according to claim 1 or 2, **characterised in that** the connector (4) is penetrated by an opening (14) which is filled at least partially with plastic material (15) of the component (5).

4. Actuator according to claim 3, **characterised in that** the opening (14) leads into the contact surface (13), and the conductor path is penetrated by an opening (43) connected to the recess, through which opening (43) plastic material (15) of the component (5) extends into the opening (14) of the connector (4).

5. Actuator according to claim 3 or 4, **characterised in that** the opening (14) is an elongated hole (27) which extends in the longitudinal direction of the wire end (3).

6. Actuator according to one of the preceding claims, **characterised in that** a guiding groove (33) is present on the component (5), said guiding groove (33) receiving the connector at least partially and running in the longitudinal direction (28) of the wire end (3).

7. Actuator according to claim 6, **characterised in that** the guiding groove (33) is formed by a groove (35) which flanks the connector (4) with two opposing groove walls (34).

8. Actuator according to one of the preceding claims, **characterised in that** the connector (4) is supported on the conductor path (6) with its contact surface (13) in an elastic manner.

9. Actuator according to claim 8, **characterised in that** the connector (4) comprises a leaf spring (23) which is curved in an arch, the side (24) of which facing the conductor path (6) abuts at least partially onto the contact surface (13).

10. Actuator according to one of the preceding claims, **characterised in that** the connector (4) comprises a crimping element (18) with which it is fixed to the wire end (3).

11. Actuator according to one of the preceding claims, **characterised in that** the connector (4) is formed in one piece with the wire end (3).

12. Actuator according to one of the preceding claims, **characterised in that** the component (5) is an MID component.

13. Method for the production of an actuator (1) according to one of the preceding claims, having the following steps:
a) an SMA element (2) is provided, on the at least one wire end (3) of which a connector (4) is arranged.
b) the SMA element is positioned on the actuator in such a way that the contact surface (13) of the connector (4) is in contact with the conductor path (6) of the component (5),
c) the SMA element (2) is prestressed by loading the wire end (3) with a tensile force (Z),
d) when a target prestressing of the SMA element (2) is achieved, the connector (4) is fixed to the plastic material of the component (5).

14. Method according to claim 13, **characterised in that** a component (5) is used which consists at least partially of a thermoplastic plastic, wherein one part of the plastic material is softened by the influence of heat and is deformed in such a way that a positive and/or non-positive connection is formed between it and the connector (4).

15. Method according to claim 14, **characterised in that** a component (5) is used which has a protrusion (37) made from thermoplastic material which is softened and deformed for fixing the connector (4).

16. Method according to claim 15, **characterised in that** the connector (4) is positioned on the conductor path (6) in such a way that the protrusion (37) penetrates the opening (14) of the connector (4).

17. Method according to one of claims 13 to 16, **characterised in that** a connector (4) is used, on which a grip element (16) is arranged, wherein the connector (4) is gripped on the grip element (16) for the prestressing of the SMA element (2).

18. Method according to claim 17, **characterised in that** a connector (4) is used for which the grip element (16) is arranged on the end thereof which faces away from the SMA element (2).

19. Method according to claim 17 or 18, **characterised in that** the grip element (16) is detached after successful fixing of the connector (4) to the component (5).

## Revendications

1. Actionneur comprenant un organe (7) de commande mobile, un élément (2) en alliage à mémoire de forme filiforme, servant au déplacement unidirectionnel de l'organe de commande, à au moins une extrémité (3) duquel est assujetti un connecteur (4) en un matériau conducteur de l'électricité, ayant une surface (13) de contact, et une pièce (5) constituée, au moins en partie, d'une matière plastique non conductrice de l'électricité et ayant une piste (6) conductrice, **caractérisé en ce que** le connecteur (4) est assujetti à une partie en matériau non-conducteur de la pièce, la surface (13) de contact étant ainsi maintenue en contact conducteur de l'électricité avec la piste (6) conductrice.

2. Actionneur suivant la revendication 1, **caractérisé en ce que** la matière plastique de la pièce (5) est une matière plastique thermoplastique.

3. Actionneur suivant la revendication 1 ou 2, **caractérisé en ce que** le connecteur (4) est traversé d'une ouverture (14), qui est emplie, au moins en partie, de la matière (15) plastique de la pièce (5).

4. Actionneur suivant la revendication 3, **caractérisé en ce que** l'ouverture (14) débouche dans la surface (13) de contact et **en ce que** la piste conductrice est traversée par une ouverture (43), qui communique avec l'évidement et par laquelle de la matière (15) plastique de la pièce (5) s'étend dans l'ouverture (14) du connecteur (4).

5. Actionneur suivant la revendication 3 ou 4, **caractérisé en ce que** l'ouverture (14) est une boutonnière (27) s'étendant dans la direction longitudinale de l'extrémité (3) du fil.

6. Actionneur suivant l'une des revendications précédentes, **caractérisé en ce que**, sur la pièce (5), est présente une coulisse (33) de guidage recevant, au moins en partie, le connecteur et s'étendant dans la direction (28) longitudinale de l'extrémité (3) du fil.

7. Actionneur suivant la revendication 6, **caractérisé en ce que** la coulisse (33) de guidage est formée d'une rainure (35) flanquant le connecteur (4) de deux parois (34) de rainure opposées.

8. Actionneur suivant l'une des revendications précédentes, **caractérisé en ce que** le connecteur (4) s'appuie, par sa surface (3) de contact, élastiquement sur la piste (6) conductrice.

9. Actionneur suivant la revendication 8, **caractérisé en ce que** connecteur (4) comprend un ressort (23) à lame, qui est courbé en forme d'arc et dont le côté (24) tourné vers la piste (6) conductrice s'applique, au moins en partie, à la surface (13) de contact.

10. Actionneur suivant l'une des revendications précédentes, **caractérisé en ce que** le connecteur (4) comprend un élément (18) de sertissage, par lequel il est assujetti à l'extrémité (3) du fil.

11. Actionneur suivant l'une des revendications précédentes, **caractérisé en ce que** le connecteur (4) est constitué d'une seule pièce avec l'extrémité (3) du fil.

12. Actionneur suivant l'une des revendications précédentes, **caractérisé en ce que** la pièce (5) est une pièce MID.

13. Procédé de fabrication d'un actionneur (1) suivant l'une des revendications précédentes, comprenant les stades suivants :
a) on se procure un élément (2) en alliage à mémoire de forme, à au moins une extrémité (3) de fil duquel est monté un connecteur (4),
b) on met l'élément en alliage à mémoire de forme en position sur l'actionneur de manière à ce que la surface (13) de contact du connecteur (4) soit en contact avec la piste (6) conductrice de la pièce (5),
c) on précontraint l'élément (2) en alliage à mémoire de forme en soumettant l'extrémité (3) du fil à une force (Z) de traction,
d) lorsqu'une précontrainte de consigne de l'élément (2) en alliage à mémoire de forme est atteinte, on assujettit le connecteur (4) à la matière plastique de la pièce (5).

14. Procédé suivant la revendication 13, **caractérisé en ce qu'**on utilise une pièce (5) qui est constituée au moins en partie d'une matière plastique thermoplastique, une partie de la matière plastique étant ramollie par action de la chaleur et déformée de manière à former entre elle et le connecteur (4) une liaison à complémentarité de forme et/ou à complémentarité de force.

15. Procédé suivant la revendication 14, **caractérisé en ce qu'**on utilise une pièce (5) qui a une saillie (37) en matière thermoplastique, laquelle est pour l'assujettissement du connecteur (4) ramollie et déformée.

16. Procédé suivant la revendication 4, **caractérisé en ce qu'**on met le connecteur (4) en position sur la piste (6) conductrice de manière à ce que la saillie (37) traverse l'ouverture (14) du connecteur (4).

17. Procédé suivant l'une des revendications 13 à 16, **caractérisé en ce qu'**on utilise un connecteur (4) sur lequel est monté un élément (16) de prise, le connecteur (4) étant, pour la précontrainte de l'élément (2) en alliage à mémoire de forme, pris sur l'élément (16) de prise.

18. Procédé suivant la revendication 17, **caractérisé en ce qu'**on utilise un connecteur (4), dans lequel l'élément (16) de prise est monté à l'extrémité de celui-ci éloignée de l'élément (2) en alliage à mémoire de forme.

19. Procédé suivant la revendication 17 ou 18, **caractérisé en ce qu'**après que l'assujettissement du connecteur (4) à la pièce (5) a été effectué, on sépare l'élément (16) de prise.
